Europäisches Patentamt

European Patent Office

Office européen des brevets

(19)

(11) Veröffentlichungsnummer: **0 078 862**
**B1**

(12) **EUROPÄISCHE PATENTSCHRIFT**

(45) Veröffentlichungstag der Patentschrift:
**12.06.85**

(21) Anmeldenummer: **81109584.3**

(22) Anmeldetag: **10.11.81**

(51) Int. Cl.⁴: **H 04 M 3/30, H 04 M 11/04**

(54) **Notrufeinrichtung.**

(43) Veröffentlichungstag der Anmeldung:
**18.05.83 Patentblatt 83/20**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**DE - A - 2 530 031**
**US - A - 4 273 961**

(73) Patentinhaber: **Neumann Elektronik GmbH,
Bülowstrasse 104 - 110, D-4330 Mülheim 1 (DE)**

(72) Erfinder: **Neumann, Dirk, Dipl.-Ing., Schemelsbruch 11,
D-4330 Mülheim 1 (DE)**

(74) Vertreter: **Feder, Heinz, Dr. et al,
Dominikanerstrasse 37 Postfach 11 04 26,
D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Notrufeinrichtung mit einem Notruftelefon, das über eine zweiadrige Signalleitung und eine in einer Vermittlungsstelle angeordnete Teilnehmerschaltung mit einer Abfragestelle verbindbar ist, und bei der die Gleichstromspeisung der im Notruftelefon angeordneten Hör-, Sprech- und Steuervorrichtungen über die Signalleitung erfolgt. Derartige Notrufeinrichtungen sind an sich bekannt (z. B. DE-C Nr. 2534228 oder 2758689). Sie haben den Vorteil, dass für das ggf. weit ausserhalb einer Ortschaft angeordnete Notruftelefon keine zusätzliche Stromversorgung, beispielsweise durch eine eigene Leitung oder eine am Notruftelefon angeordnete Stromquelle, vorgesehen werden muss.

Die Teilnehmerschaltungen können an das öffentliche Fernsprechnetz angeschlossen sein.

Bei derartigen Notrufeinrichtungen ist es wichtig, die einzelnen Notruftelefone, die oft weit verstreut und in grossen Abständen von der zentralen Abfragestelle angeordnet sind, laufend auf ihre Funktionsfähigkeit zu überprüfen, damit eventuelle Störungen sofort festgestellt und behoben werden können.

Um diese Überprüfung in einfacher Weise von der Abfragestelle aus durchführen zu können, ist vorgesehen, dass jedes Notruftelefon aus einem Ruhezustand, in dem ein konstanter Gleichstrom vorgegebener Grösse über die Signalleitung fliesst, in einen Betriebszustand mit höherem Stromfluss schaltbar ist, und dass zu Überwachungszwecken vom Notruftelefon Prüfimpulse auf die Signalleitung gegeben werden, indem das Notruftelefon für eine gegebene Zeitdauer aus dem Ruhezustand in den Betriebszustand geschaltet wird. In der Teilnehmerschaltung werden diese Prüfimpulse laufend ausgewertet und somit wird der Betriebszustand des Notruftelefons überwacht.

Die der Erfindung zugrundeliegende Aufgabe bestand darin, bei einer Notrufeinrichtung der oben beschriebenen Art das Notruftelefon so auszubilden, dass einerseits möglichst viele Einrichtungteile des Notruftelefons mit überprüft werden und die Prüfimpulse nur dann abgegeben werden, wenn alle diese Einrichtungteile des Notruftelefons funktionieren, und dass andererseits die Erzeugung und Abgabe der Prüfimpulse in möglichst einfacher Weise geschieht, wobei beim Übergang des Notruftelefons aus dem Ruhezustand in den Betriebszustand jeweils unterschieden werden soll, ob dieser Übergang zu Prüfzwecken oder aufgrund eines abgegebenen Notrufes erfolgt.

Die in der Teilnehmerstelle angeordneten Einrichtungen zum Empfang und zur Auswertung der Prüfimpulse sind nicht Gegenstand der vorliegenden Erfindung.

Die Lösung der oben angegebenen Aufgabe erfolgt erfindungsgemäss dadurch, dass in dem Notruftelefon eine Einschaltvorrichtung angeordnet ist, deren Kontakt einerseits über einem mit einer Ruftaste verbundenen Permanentmagneten und andererseits über eine Relaispulse betätigbar ist, sowie ein angesteuerter Impulsgeber, der einen Steuerimpuls vorgegebener Länge erzeugt, welche der Relaisspule zugeführt wird, wobei das von der Einschaltvorrichtung abgegebene Einschaltsignal einer Steuerschaltung zugeführt wird, die je nachdem, ob das Einschaltsignal durch die Ruftaste oder einen Steuerimpuls ausgelöst ist, entweder das Notruftelefon zur Abgabe eines Rufsignales vom Ruhezustand in den Betriebszustand schaltet oder einen ersten Zeitschalter ansteuert, der das Notruftelefon für ein vorgegebenes Zeitintervall zur Abgabe eines Prüfimpulses aus dem Ruhezustand in den Betriebszustand schaltet.

Durch die erfindungsgemässe Ausbildung des Notruftelefons wird zunächst sichergestellt, dass die Funktionsfähigkeit der Einschaltvorrichtung des Notruftelefons in die Prüfung mit einbezogen ist, da die Prüfimpulse nur abgegeben werden können, wenn die Einschaltvorrichtung ordnungsgemäss arbeitet. Durch die vorgegebene Länge der Prüfimpulse und die Tatsache, dass nur entweder ein Prüfimpuls oder ein Rufsignal abgegeben werden kann, ist in der Teilnehmerschaltung bzw. der Abfragestelle genau zu unterscheiden, ob ein Prüfsignal oder ein Rufsignal vorliegt.

Vorteilhafte Ausführungsformen der erfindungsgemässen Notrufeinrichtung sind möglich und in den Unteransprüchen beschrieben.

So wird bei einer ersten Ausführungsform der Impulsgeber durch eine Spannungskontrollschaltung angesteuert, die nach einer Unterbrechung des im Ruhezustand über die Signalleitung fliessenden Gleichstroms bei Erreichen eines vorgegebenen Wertes ein Steuersignal abgibt. Bei dieser Ausführungsform ist es zweckmässig, wenn gleichzeitig mit der Ansteuerung des ersten Zeitschalters die Hörvorrichtung, ein mit der Hörvorrichtung verbundener Tonfrequenzsender und die Sprechvorrichtung eingeschaltet werden. Bei dieser Ausführungsform reagiert also das Notruftelefon auf jede Beendigung einer Unterbrechung der Schleife mit der Abgabe eines Prüfimpulses, dem ein Tonfrequenzsignal aufgeprägt ist. Da dieses Tonfrequenzsignal über die Hörvorrichtung, also den Lautsprecher, abgegeben und von der Sprechvorrichtung, also dem Mikrofon, aufgenommen wird, wird bei dieser Überprüfung zusätzlich festgestellt, ob die Hör-Sprechvorrichtungen einwandfrei funktionieren.

Bei dieser Ausführungsform ist es zweckmässig, wenn durch das von der Spannungskontrollschaltung abgegebene Steuersignal gleichzeitig eine Sperrschaltung angesteuert wird, durch welche für einen vorgegebenen Zeitraum die Weitergabe von Rufsignalen über die Signalleitung gesperrt ist. Innerhalb dieses Zeitraumes, in dem sich das Notruftelefon im Ruhezustand befindet, ohne dass ein Ruf abgegeben werden kann, ist es möglich, durch eine genaue Messung des Ruhestromes eine Kurzschlussprüfung durchzuführen.

Bei einer anderen Ausführungsform der erfindungsgemässen Notrufeinrichtung wird der Impulsgeber durch einen zweiten Zeitschalter nach Ablauf eines vorgegebenen Zeitintervalles angesteuert und der zweite Zeitschalter nach Abgabe des Prüfimpulses durch den ersten Zeitschalter wieder gestartet. Bei dieser Ausführungsform werden also in durch den zweiten Zeitschalter vorgegebenen Zeitintervallen Prüfimpulse abgegeben, auch wenn keine Schleifenunterbrechung stattgefunden hat. Das Notruftelefon wird also laufend überwacht.

Diese laufende Überwachung kann kombiniert werden mit einer Überwachung durch Abgabe eines zusätzlichen Prüfimpulses nach einer Unterbrechung des über die Signalleitung fliessenden Gleichstromes in der oben beschriebenen Weise. Diesen zusätzlichen Prüfimpulsen kann dann auch wiederum ein Tonfrequenzsignal aufgeprägt sein.

Auch bei dieser Ausführungsform kann nach Abgabe eines Prüfimpulses aufgrund einer Unterbrechung des im Ruhezustand fliessenden Gleichstroms das Notruftelefon für einen vorgegebenen Zeitraum in den Ruhezustand geschaltet sein und während dieses Zeitraumes die Weitergabe von Rufsignalen durch die Steuerschaltung gesperrt sein.

Bei beiden Ausführungsformen der erfindungsgemässen Notrufeinrichtung ist es aus Sicherheitsgründen zweckmässig, wenn in der Steuerschaltung ein Rufspeicher enthalten ist, in dem während des Zeitraumes, in welchem die Weitergabe von Rufsignalen auf die Signalleitung gesperrt ist, ein durch die Ruftaste ausgelöstes Einschaltsignal gespeichert wird und nach Aufhebung der Sperrung von der Steuerschaltung das Rufsignal abgegeben wird.

Im folgenden werden anhand der beigefügten Zeichnungen zwei Ausführungsbeispiele für eine Notrufeinrichtung nach der Erfindung näher erläutert.

In den Zeichnungen zeigen

Fig. 1 ein Blockschaltbild für eine Ausführungsform eines Notruftelefons bei einer Notrufeinrichtung nach der Erfindung, in der Prüfimpulse sowohl in zeitlichen Abständen als auch nach einer Unterbrechung des über die Signalleitung fliessenden Stromes abgegeben werden,

Fig. 2 in einem Diagramm einen möglichen zeitlichen Verlauf des dem Notruftelefon nach Fig. 1 zugeführten Gleichstroms in verschiedenen Betriebszuständen,

Fig. 3 in einem detaillierteren Schaltbild Teile des Notruftelefons nach Fig. 1,

Fig. 4 ein Blockschaltbild für eine andere Ausführungsform eines Notruftelefons an einer erfindungsgemässen Notrufeinrichtung, bei der Prüfimpulse nur nach einer Unterbrechung des über die Signalleitung fliessenden Gleichstroms abgegeben werden, und

Fig. 5 in einem detaillierteren Schaltbild Teile des Notruftelefons nach Fig. 4.

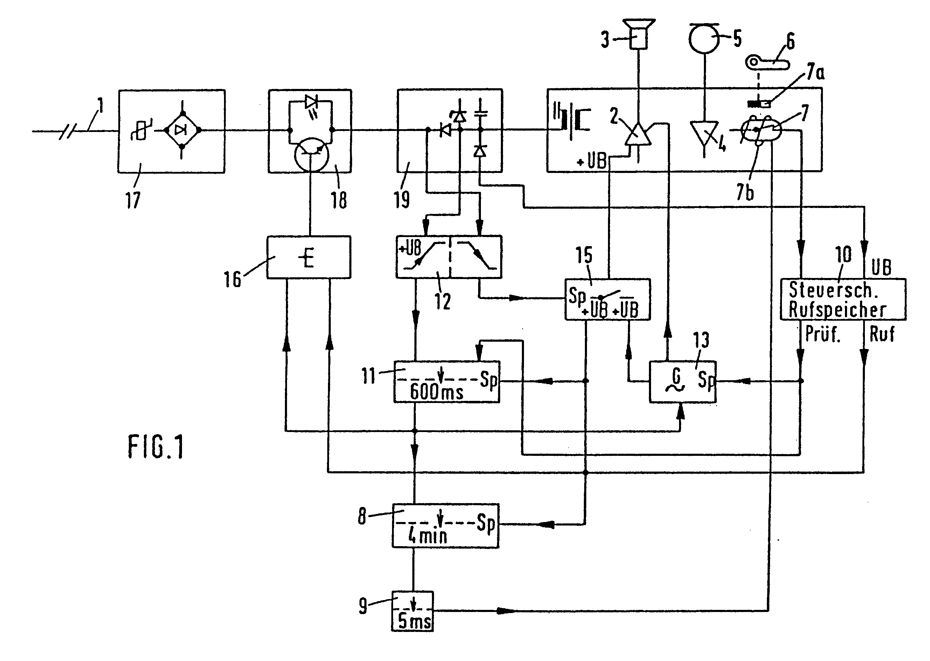

In Fig. 1 ist ein Notruftelefon dargestellt, das über eine zweiadrig Signalleitung mit der im übrigen nicht dargestellten Teilnehmerschaltung einer Notrufeinrichtung verbunden ist. Der Anschluss des Notruftelefons an die Signalleitung 1 erfolgt über eine Eingangsschaltung 17, welche in bekannter Weise Schutzschaltungen gegen Überspannungen auf der Leitung und Umpolungen der Leitung enthält. Auf die Eingangsschaltung 17 folgt eine allgemein mit 18 bezeichnete Schaltung zur Aufrechterhaltung eines konstanten Gleichstroms im Ruhezustand und zur Umschaltung vom Ruhezustand auf den Betriebszustand. An die Schaltung 18 schliesst sich eine Schaltung 19 zur Erzeugung der notwendigen Betriebsspannungen UB an. Weiterhin sind an die Signalleitung 1 in nicht eigens dargestellter und an sich bekannter Weise die aus einem Verstärker 2 und einem lautsprecher 3 bestehende Hörvorrichtung sowie die aus einem Verstärker 4 und einem Mikrofon 5 bestehende Sprechvorrichtung angeschlossen.

Die Betätigung des Notruftelefons und die Einleitung der Aussendung eines Rufsignales erfolgt von einer handbetätigten Ruftaste 6 aus. Diese wirkt mechanisch auf einen Permanentmagneten 7a, durch den der Kontakt eines Reedschalters 7 betätigbar ist. Der Kontakt 7 des Reedschalters kann gleichfalls durch Erregung einer Relaiswicklung 7b betätigt werden.

Die aus dem Reedschalter 7 mit Permanentmagnet 7a bzw. Relaisspule 7b bestehende Einschaltvorrichtung ist mit einer Steuerschaltung 10 verbunden, die weiter unten näher erläutert wird.

Weiterhin weist das Notruftelefon einen ersten Zeitschalter 11 und einen zweiten Zeitschalter 8 sowie einen Impulsgeber 9 auf, deren Aufbau, Zweck und Funktionsweise weiter unten näher erläutert wird. Schliesslich ist ein mit dem Hörverstärker 2 verbindbarer Tonfrequenzsender 13 vorhanden sowie eine Spannungskontrollschaltung 12, welche beim Anstieg und Abfall der im Ruhezustand anliegenden Betriebsspannung bestimmte Signale in weiter unten erläuterter Weise zur Steuerung abgibt.

Das Notruftelefon gemäss Fig. 1 kann in der nachstehend erläuterten Weise verschiedene Betriebszustände einnehmen.

Die Schaltung ist so ausgelegt, dass im Ruhezustand ein konstanter Gleichstrom von beispielsweise 5 mA fliesst. Der Mikrofonverstärker 4 ist auch im Ruhezustand eingeschaltet, so dass das Notruftelefon von der Teilnehmerschaltung aus hochohmig auf Umgebungsgeräusche abgehört werden kann.

Nach jeder Unterbrechung des im Ruhezustand fliessenden Stromes, also auch beim erstmaligen Einschalten der Anlage, wird von der Spannungskontrollschaltung 12 aus ein Steuersignal auf den ersten Zeitschalter 11 gegeben, der über eine Zuführungsschaltung 16 der Schaltung 18 zugeführt wird und das Notruftelefon für den gegebenen Zeitraum vom Ruhezustand in den Betriebszustand schaltet, in dem ein höherer Gleichstrom über die Signalleitung fliesst. Gleichzeitig werden vom ersten Zeitschalter 11 aus der Tonfrequenzsender 13 und der Hörverstärker 2 eingeschaltet. Der Lautsprecher strahlt das erzeugte Tonfrequenzsignal ab, dieses wird vom Mikrofon 5 aufgenommen, und auf diese Weise wird über die Signalleitung 1 während des eingeschalteten Betriebszustandes ein Tonfrequenzsignal gegeben, allerdings nur dann, wenn alle in den Kreis eingeschalteten Vorrichtungen, also auch beispielsweise Lautsprecher und Mikrofon, wirklich funktionieren. In der Teilnehmerschaltung wird dieses Tonfrequenzsignal empfangen und ausgewertet.

Nach seinem Ablauf steuert der erste Zeitschalter 11 den zweiten Zeitschalter 8 an, der beispielsweise nach 4 min ein Signal an den Impulsgeber 9 abgibt. Dieser erzeugt einen Steuerimpuls von beispielsweise 5 ms Länge, welcher der Relaiswicklung 7b des Reedschalters 7 zugeführt wird. Dieser gibt ein entsprechendes Einschaltsignal von in diesem Fall ebenfalls 5 ms Dauer ab, welches der Steuerschaltung 10 zugeführt wird. In der Steuerschaltung wird in weiter unten erläuterter Weise festgestellt, ob das eintreffende Einschaltsignal durch einen Steuerimpuls oder eine Betätigung der Ruftaste verursacht ist. Handelt es sich um ein durch einen Steuerimpuls ausgelöstes Einschaltsignal, so geht von der Steuerschaltung 10 über die mit Prüf bezeichnete Leitung ein Signal aus, das den ersten Zeitschalter 11 zur Abgabe des Prüfsignals von 600 ms Dauer veranlasst. Gleichzeitig wird allerdings der Tonfrequenzsender 13 gesperrt, so dass durch dieses Prüfsignal zwar über die Zuführungsschaltung 16 das Notruftelefon vom Ruhezustand in den Betriebszustand geschaltet wird, aber nicht gleichzeitig ein Tonfrequenzsignal ausgesendet wird. In der Teilnehmerschaltung wird auch dieses Signal ausgewertet. Durch das Prüfsignal ohne Tonfrequenzabgabe werden die Hör-Sprechvorrichtungen nicht mit überprüft, wohl aber die Funktionsfähigkeit der Einschaltvorrichtung 7. Nach seinem Ablauf wird vom ersten Zeitschalter 11 aus wieder der zweite Zeitschalter 8 angesteuert, und der Überwachungszyklus beginnt von neuem.

Wird durch Betätigung der Ruftaste 6 von der Einschaltvorrichtung 7 ein Signal an die Steuerschaltung 10 gegeben, so gibt diese nach Erkennung, dass es sich um einen Ruf handelt, über die mit Ruf bezeichnete Leitung ein Signal über die Zuführungsschaltung 16 an die Schaltung 18, wodurch das Notruftelefon niederohmig und damit in den Betriebszustand geschaltet wird. Gleichzeitig werden über die entsprechenden Eingänge Sp Sperrsignale an die Zeitschalter 8 und 11 gegeben und über die Schaltung 15 der Lautsprecherverstärker 2 eingeschaltet.

Es kann nunmehr ein Gespräch abgewickelt werden.

Nach Beendigung des Gesprächs wird der im Ruhezustand fliessende Gleichstrom für eine vorgegebene Zeit, die im allgemeinen grösser als 3 s ist, unterbrochen. Bei dieser Unterbrechung wird von der Spannungskontrollschaltung 12 aus sofort ein Sperrsignal auf den Eingang Sp der Schaltung 15 gegeben, wodurch die Betriebsspannung des Lautsprecherverstärkers 2 abgeschaltet wird, um ein Anpfeifen zu verhindern. Die übrigen Vorrichtungen des Notruftelefons schalten sich durch die fehlende Betriebsspannung von selbst ab. Beim Wiederanstieg der Spannung auf der Signalleitung im Ruhezustand wird der bereits oben geschilderte Prüfvorgang mit Abgabe eines Tonfrequenzsignals von 600 ms Dauer ausgelöst. Nach Abgabe dieses Prüfsignals wird der Ruhezustand für eine vorgegebene Zeit von beispielsweise 2 s aufrechterhalten. Innerhalb dieser Zeit kann kein Ruf abgegeben werden.

Diese Zeit dient dazu, um von der Teilnehmerschaltung her eine Kurzschlussprüfung durchführen zu können. Während dieser Zeit wird in weiter unten erläuterter Weise ein durch die Ruftaste 6 ausgelöster Ruf in einem mit der Steuerschaltung 10 verbundenen Speicher gespeichert und nach Ablauf der Unterbrechungszeit bzw. der Kurzschlussprüfzeit abgegeben.

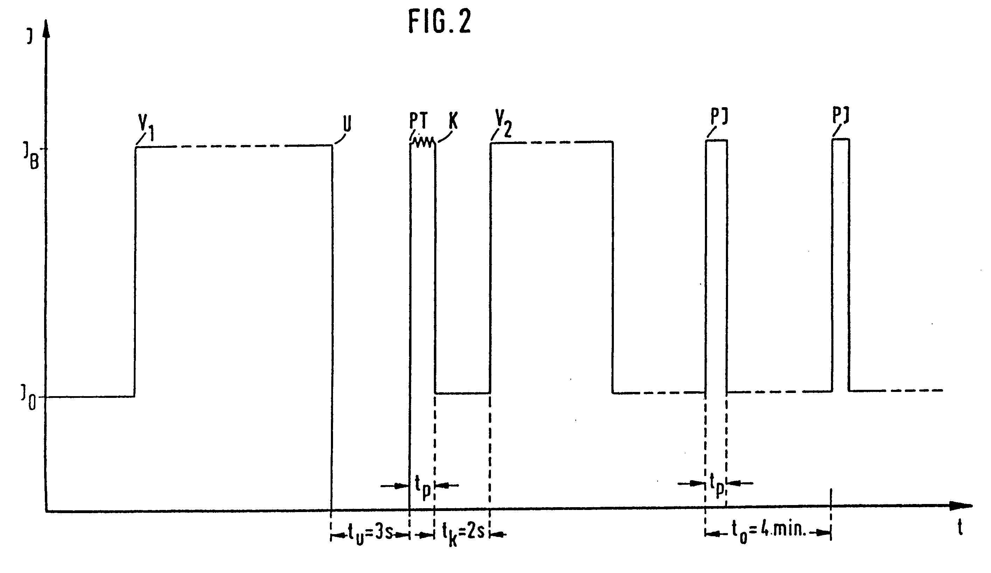

In Fig. 2 ist ein möglicher Ablauf verschiedener Betriebszustände des in Fig. 1 dargestellten Notruftelefons in einem Strom/Zeit-Diagramm für den über die Signalleitung fliessenden Strom dargestellt.

Zum Zeitpunkt $t = 0$ fliesse ein Strom $I_o = 5$ mA, der dem Ruhezustand des Notruftelefons entspricht. Durch Druck auf die Ruftaste 6 werde ein Ruf ausgelöst, der in der bereits beschriebenen Weise am Punkt $V_1$ das Notruftelefon in den Betriebszustand schaltet, in dem der Betriebsstrom $I_B$ fliesst. Nach Abwicklung des Gespräches wird am Punkt U der Stromfluss für eine Zeit $t_U = 3$ s vollständig unterbrochen. Nach Aufhebung der Unterbrechung wird in der beschriebenen Weise der Prüfimpuls PT mit Tonfrequenzsignal für einen Zeitraum $t_P = 600$ ms abgegeben. Anschliessend an den Prüfimpuls PT erfolgt ein Zeitraum $t_k = 2$ s, in dem das Notruftelefon in den Ruhezustand zurückkehrt und auch kein weiterer Ruf abgehen kann. Die nächste aufgrund eines Rufes zustandekommende Gesprächsverbindung setzt beispielsweise am Punkt $V_2$ ein usw. In den Pausen zwischen den Gesprächen werden in der bereits erläuterten Weise in Abständen $t_o = 4$ min die Prüfimpulse PI abgegeben, die das Notruftelefon für den Zeitraum $t_P = 600$ ms vom Ruhezustand in den Betriebszustand schalten, ohne dass zusätzlich ein Tonfrequenzsignal abgegeben wird.

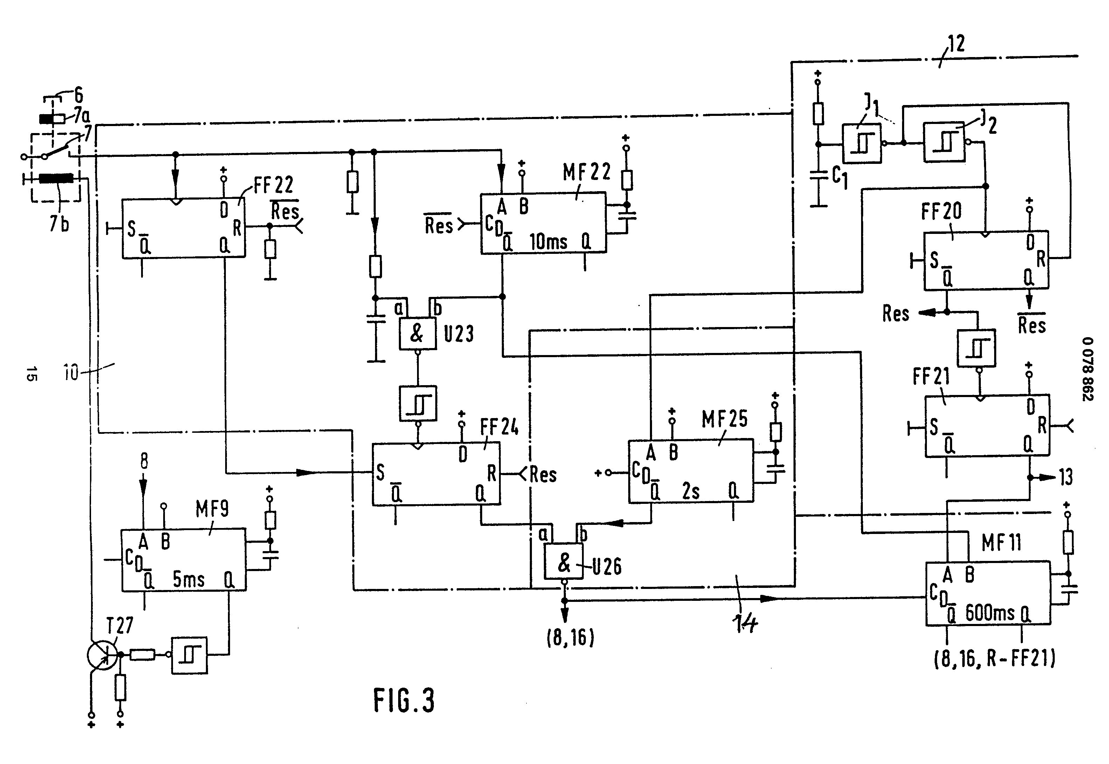

Im folgenden werden anhand von Fig. 3 weitere Einzelheiten des Notruftelefons nach Fig. 1, vor allem bezüglich der Ausbildung der Steuerschaltung 10, der Ruhestromkontrollschaltung 12 und der Rufspeicher, näher erläutert.

In dem Ausführungsbeispiel nach Fig. 3 sind die Zeitschalter, der Impulsgeber, die Rufspeicher und weitere Steuerelemente durch bistabile Kippstufen, also Flip-Flop-Schaltungen und monostabile Kippstufen, also Mono-Flop-Schaltungen verwirklicht.

Bei der Schaltung nach Fig. 3 wird beim Anlegen der Betriebsspannung an das Notruftelefon zunächst der Kondensator C1 aufgeladen. Bei Erreichen eines vorgegebenen Schwellwertes schalten die Inverter I1 und I2 und setzen ein Flip-Flop FF20. An den Ausgängen $\overline{Q}$ und Q erscheinen Signale, die mit Res und $\overline{Res}$ bezeichnet sind und in der aus Fig. 3 unmittelbar ersichtlichen Weise auch zur Rücksetzung bestimmter, weiter unten erläuterter Flip-Flop-Schaltungen dienen. Erst wenn diese Signale anliegen, ist die Gesamtschaltung betriebsfähig.

Das Anlegen der Betriebsspannung geschieht auch nach jeder der bereits erläuterten Unterbrechungen des über die Signalleitung fliessenden Gleichstromes. Durch das Signal Res wird ein weiteres Flip-Flop FF21 gesetzt, welches über seinen Ausgang Q den Tonfrequenzsender 13 und den Lautsprecherverstärker 2 einschaltet. Gleichzeitig wird von diesem Ausgang Q aus das Mono-Flop MF11 eingeschaltet.

Dieses Mono-Flop MF11 entspricht dem Zeitschalter 11 in Fig. 1 und bleibt für 600 ms eingeschaltet. Für diesen Zeitraum geht das Notruftelefon vom Ruhezustand in den Betriebszustand, also von einem hochohmigen in einen niederohmigen Zustand über. Es wird in der oben beschriebenen Weise ein Prüfimpuls mit Tonfrequenzsignal abgegeben. Nach Ablauf der Zeit wird vom Mono-Flop MF11 aus der Zeitschalter 8 gestartet und das Flip-Flop FF21 über dessen Eingang R zurückgesetzt.

Vom Zeitschalter 8 aus wird nach 4 min ein Startsignal auf den Eingang A des Mono-Flops MF9 gegeben. Von dessen Ausgang Q aus wird ein Signal von 5 ms Dauer auf den Transistor T27 gegeben, der den Reedschalter 7 für eine Zeit von 5 ms einschaltet. Vom Reedschalter 7 aus wird dieses Signal an den Clockeingang eines Flip-Flops FF22 und an den A-Eingang eines Mono-Flops MF22 gegeben. Das Flip-Flop FF22 kann zu diesem Zeitpunkt aber nicht gesetzt werden, da sein Reseteingang R auf hohem Potential liegt. Das Mono-Flop MF22 hat eine Rückkehrzeit von 10 ms, die als Torzeit ausgenutzt wird, zur Unterscheidung, ob vom Reedschalter 7 her ein Signal von 5 ms Dauer zur Erzeugung eines Prüfimpulses oder ein durch Betätigung der Ruftaste ausgelöstes Signal, das erheblich länger ist, abgegeben worden ist. Hierzu werden das vom Reedschalter 7 gelieferte Signal einerseits und das vom Ausgang $\overline{Q}$ des Mono-Flops MF22 abgegebene Signal andererseits den beiden Eingängen eines NAND-Gatters U23 zugeführt. Dieses NAND-Gatter U23 stellt nun fest, wie der Zustand der vom Reedschalter 7 kommenden Leitung nach 10 ms ist. Der Steuerimpuls hat eine Länge von 5 ms, was der halben Torzeit entspricht. Dies hat zur Folge, dass in diesem Falle das NAND-Gatter U23 nicht durchschalten kann, weil während des Anliegens des Signals vom Mono-Flop MF22 der Eingang a von U23 für 5 ms auf H liegt, während der Eingang b von U23 auf L liegt. Nach Ablauf der 10 ms liegt zwar der Eingang b von U23 wieder auf H, aber inzwischen liegt der Eingang a von U23 wieder auf L. Damit ist entschieden, dass es sich um einen reinen Steuerimpuls handelt, der einen Prüfimpuls auslösen soll. Zu diesem Zweck wird vom Ausgang $\overline{Q}$ des Mono-Flops MF22 das Mono-Flop MF11 über seinen Eingang B gestartet, so dass wieder in der bereits beschriebenen Weise ein Prüfimpuls von 600 ms Dauer abgegeben und anschliessend der Zeitschalter 8 gestartet wird. Der Tonfrequenzsender 13 bleibt hierbei gesperrt.

Wird vom Reedschalter 7 durch Betätigung der Ruftaste 6 ein Signal abgegeben, das länger als 10 ms dauert, so kann das NAND-Gatter U23 nach Ablauf der Torzeit von 10 ms durchschalten, da in diesem Falle nach Ablauf der Torzeit am Eingang a von U23 noch das Signal H anliegt. Dies hat zur Folge, dass nunmehr das Flip-Flop FF24 gesetzt wird, das als Rufspeicher dient. Von seinem Ausgang Q wird ein Signal auf den einen Eingang a eines NAND-Gatters U26 gegeben. Wenn die Betätigung der Ruftaste später als 2 s nach einer Unterbrechung des im Ruhezustand fliessenden Stromes erfolgte, ist das Mono-flop MF25 nicht gesetzt und somit sind die Eingänge a und b des NAND-Gatters U26 beide auf hohem Potential, also im Zustand H.

Von U26 geht dann das Rufsignal an die Schaltungen 16 bzw. 18 (s. Fig. 1) und gleichzeitig werden die Zeitschalter 8 und das Mono-Flop MF11, also der Zeitschalter 11, gesperrt.

Nach einer Unterbrechung des über die Signalleitung fliessenden Gleichstroms wird durch das Wiederansteigen der Speisespannung das Mono-Flop MF25 für 2 s gesetzt und für diese Zeit ist das NAND-Gatter U26 für ein Rufsignal nicht durchlässig.

Während einer Unterbrechung des Gleichstroms wird die Betriebsspannung für alle Kippschaltungen abgeschaltet, nur das Flip-Flop FF22, das an eine separate Spannungsversorgung angeschlossen ist, bleibt eingeschaltet. Da andererseits in diesem Zustand das Signal $\overline{Res}$ nicht anliegt, kann dieser Flip-Flop nunmehr durch Betätigung das Reedschalters 7 gesetzt werden. Mit Wiederanliegen der Betriebsspannung wird der normale Funktionsablauf wieder eingeleitet. Der Ausgang Q des Flip-Flops FF22 setzt nunmehr unter Umgehung der Torschaltung aus den Schaltelementen U23 und MF22 das Flip-Flop FF24 direkt, und der Ruf kann abgegeben werden. Auf diese Weise wird erreicht, dass eine Rufspeicherung auch während einer Unterbrechung des Gleichstroms sichergestellt ist.

Aus Fig. 3 ist auch ohne weiteres abzulesen, dass beim Festklemmen der Ruftaste 6 in der Einschaltstellung die Abgabe der Prüfimpulse im 4-min-Takt nicht möglich ist, so dass auch ein solcher Fehler in der Teilnehmerschaltung spätestens nach Ablauf des Zeitraumes von 4 min bemerkt werden muss.

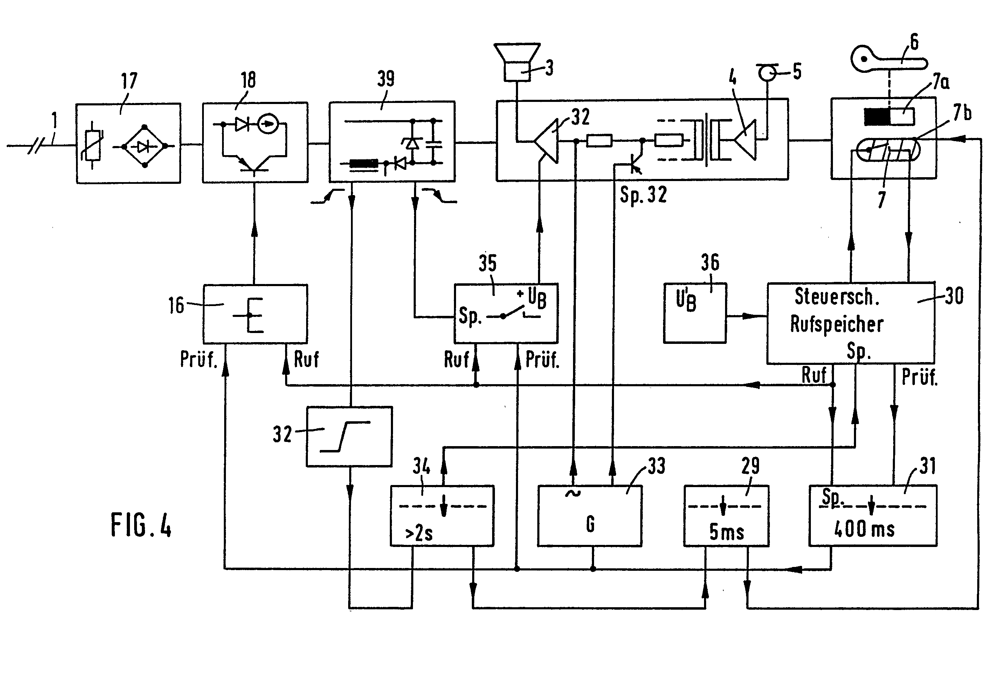

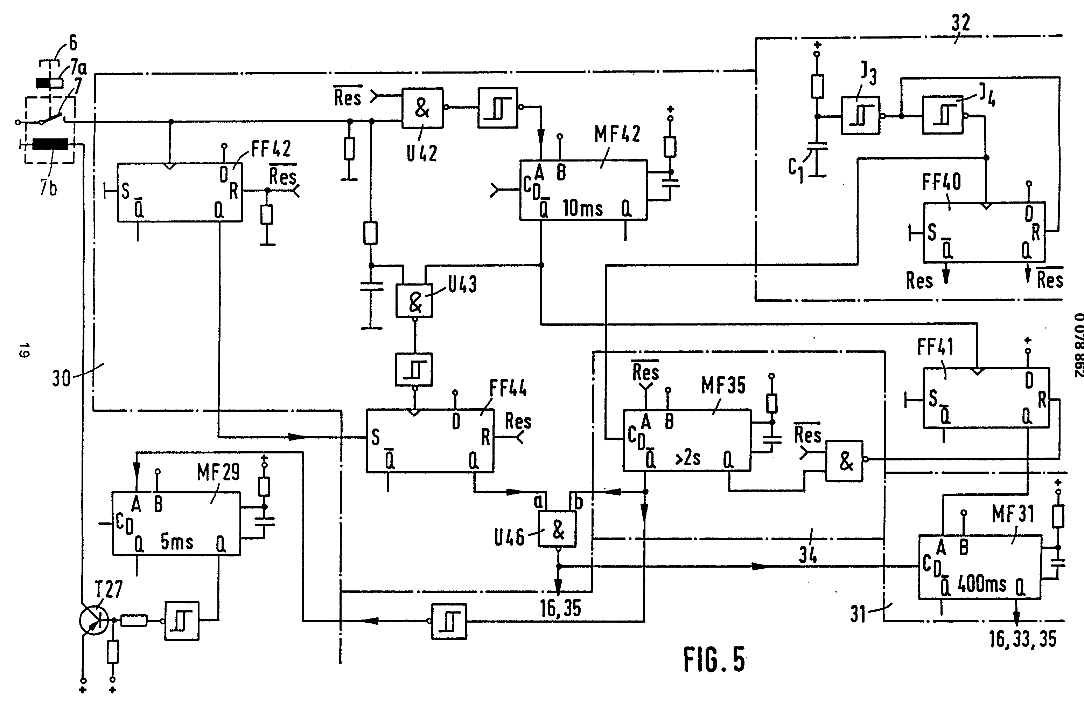

In den Fig. 4 und 5 ist ein Notruftelefon dargestellt, bei dem die Prüfimpulse nicht wie bei dem anhand der Fig. 1 bis 3 beschriebenen Ausführungsbeispiel fortlaufend in gleichbleibenden Zeitabständen abgegeben werden. Bei der in den Fig. 4 und 5 dargestellten Ausführungsform werden Prüfimpulse vielmehr nur jeweils nach einer Unterbrechung des über die Signalleitung fliessenden Gleichstroms abgegeben. Diese Unterbrechung kann von der Teilnehmerschaltung in der Vermittlungsstelle aus durchgeführt werden. Sie kann in regelmässigen Zeitabständen durchgeführt werden.

Die in den Fig. 4 und 5 dargestellte Vorrichtung ist grundsätzlich ähnlich aufgebaut wie die Vorrichtung nach den Fig. 1 bis 3. Im folgenden sind die der Ausführungsform nach Fig. 1 bis 3 in Aufbau und Funktion genau entsprechenden Bauteile und Schaltungsteile mit gleichen Bezugsziffern bezeichnet.

Bei dem in Fig. 4 dargestellten Notruftelefon ist an die Signalleitung 1 wiederum die bereits beschriebene Eingangsschaltung 17 angeschlossen, auf welche eine mit 18 bezeichnete Schaltung zur Aufrechterhaltung eines konstanten Gleichstroms im Ruhezustand und zur Umschaltung vom Ruhezustand auf den Betriebszustand folgt. An die Schaltung 18 schliesst sich eine Schaltung 39 zur Erzeugung der notwendigen Betriebsspannungen an. Weiterhin sind an die Signalleitung 1 die aus einem Verstärker 32 und einem Lautsprecher 3 bestehende Hörvorrichtung sowie die aus einem Verstärker 4 und einem Mikrofon 5 bestehende Sprechvorrichtung angeschlossen.

Die Betätigung des Notruftelefons und die Einleitung der Aussendung eines Rufsignals erfolgt in der bereits beschriebenen Weise von der Ruftaste 6 aus über den Kontakt eines Reedschalters 7, der mechanisch vom Permanentmagneten 7a und elektrisch durch einen Ansteuerimpuls über eine Relaiswicklung 7b betätigbar ist.

Diese Einschaltvorrichtung 7 ist mit einer Steuerschaltung 30 verbunden, die weiter unten näher erläutert wird.

Das Notruftelefon weist einen Zeitschalter 31 sowie einen Impulsgeber 29 auf, deren Funktionsweise weiter unten näher erläutert wird. Weiterhin ist ein Tonfrequenzsender 33 vorhanden sowie eine Resetschaltung, welche beim Anstieg der im Ruhezustand anliegenden Betriebsspannung in der weiter unten beschriebenen Weise ein Steuersignal abgibt.

Im Ruhezustand der Schaltung fliesst ein konstanter Gleichstrom von beispielsweise 5 mA. Nach jeder Unterbrechung des im Ruhezustand fliessenden Stroms wird von der Resetschaltung 32 aus ein Steuersignal auf eine Sperrschaltung 34 gegeben, durch welche für einen vorgegebenen Zeitraum von beispielsweise mehr als 2 s die Weitergabe von Rufsignalen über die Signalleitung 1 gesperrt ist. Das gleiche Steuersignal wird auf dem Impulsgeber 29 gegeben. Dieser erzeugt einen Steuerimpuls von beispielsweise 5 ms Länge, welcher in der bereits beschriebenen Weise der Relaiswicklung 7b des Reedschalters 7 zugeführt wird. Das vom Reedschalter 7 erzeugte Einschaltsignal wird der Steuerschaltung 30 zugeführt. In dieser wird in weiter unten erläuterter Weise festgestellt, ob das Eintreffen der Einschaltsignale durch einen Steuerimpuls oder eine Betätigung der Ruftaste verursacht ist. Handelt es sich um ein durch einen Steuerimpuls ausgelöstes Einschaltsignal, so geht von der Steuerschaltung 30 über die mit Prüf bezeichnete Leitung ein Signal aus, das den Zeitschalter 31 zur Abgabe eines Prüfsignals von etwa 400 ms Dauer veranlasst. Durch dieses Signal wird einerseits der Tonfrequenzsender 33 eingeschaltet und andererseits über die Zuführungsschaltung 16 das Notruftelefon vom Ruhezustand in den Betriebszustand geschaltet. Das vom Tonfrequenzsender 33 ausgehende Tonfrequenzsignal wird über den Lautsprecherverstärker 32 dem Lautsprecher 3 zugeführt. Gleichzeitig wird vom Tonfrequenzsender 33 aus ein Sperrsignal an den Eingang sp32 der Hör- und Sprechvorrichtung gegeben, durch welches verhindert wird, dass das Tonfrequenzsignal intern auf die Signalleitung 1 gelangt. Der Lautsprecher 3 strahlt das erzeugte Tonfrequenzsignal ab, dieses wird vom Mikrofon 5 aufgenommen und es wird über die Signalleitung 1 ein Tonfrequenzsignal abgegeben, wenn alle in den Kreis eingeschalteten Vorrichtungen funktionieren.

Wird durch die Betätigung der Ruftaste 6 von der Einschaltvorrichtung 7 ein Signal an die Steuerschaltung 30 gegeben, so gibt diese über die mit Ruf bezeichnete Leitung ein Signal über die Zuführungsschaltung 16 an die Schaltung 18, wodurch das Notruftelefon niederohmig und damit in den Betriebszustand geschaltet wird. Gleichzeitig wird über den Eingang Sp der Zeitschalter 31 gesperrt und über die Schaltung 35 der Lautsprecherverstärker 32 eingeschaltet. Das Gespräch kann abgewickelt werden.

Nach Beendigung des Gesprächs wird durch eine Unterbrechung des über die Signalleitung fliessenden Gleichstroms ein Prüfvorgang ausgelöst. Ebenso kann zu einem beliebigen Zeitpunkt durch eine Schleifenunterbrechung ein weiterer Prüfvorgang ausgelöst werden. Bei einer solchen Unterbrechung wird von der Schaltung 39 aus ein Sperrsignal auf den Eingang Sp der Schaltung 35 gegeben, wodurch die Betriebsspannung des Lautsprecherverstärkers 32 abgeschaltet wird. Beim Wiederanstieg der Spannung auf der Signalleitung wird der bereits oben geschilderte Prüfvorgang ausgelöst. Während der durch die Schaltung 34 nach Abgabe des Prüfimpulses durchgeführten Sperrung der Rufabgabe kann von der Teilnehmerschaltung her die Kurzschlussprüfung durchgeführt werden. Ein während dieser Zeit durch die Ruftaste 6 ausgelöster Ruf wird in der Steuerschaltung 30 in der unten beschriebenen Weise gespeichert und nach Ablauf der Unterbrechungszeit abgegeben.

Ein möglicher zeitlicher Ablauf der Betriebszustände an der in den Fig. 4 und 5 dargestellten Ausführungform lässt sich ebenfalls aus Fig. 2 (linke Hälfte) ablesen. Durch Druck auf die Ruftaste 6 wird ein Ruf ausgelöst, der am Punkt $V_1$ das Notruftelefon in den Betriebszustand schaltet, wobei der Strom vom Ruhestrom $I_0$ auf den Betriebsstrom $I_B$ ansteigt. Nach Abwicklung des Gesprächs (Punkt U) oder zu einem beliebigen anderen Zeitpunkt wird von der Teilnehmerschaltung aus der Stromfluss für eine Zeit $T_U = 3$ s der Stromfluss vollständig unterbrochen. Nach Aufhebung der Unterbrechung wird in beschriebener Weise ein Prüfimpuls PT mit einem Tonfrequenzsignal abgegeben. Anschliessend an den Prüfimpuls PT erfolgt ein Zeitraum $t_k = 2$ s, in dem das Notruftelefon in den Ruhezustand zurückkehrt und kein weiterer Ruf abgegeben werden kann.

Die in Fig. 2 (rechte Hälfte) dargestellte Folge von zeitlich aufeinanderfolgenden Prüfimpulsen PJ entfällt bei dieser Ausführungsform.

Einzelheiten des Notruftelefons nach Fig. 4, vor allem hinsichtlich der Steuerschaltung 30, sind Fig. 5 zu entnehmen.

Die Schaltung nach Fig. 5 ist in einigen Teilen analog der Schaltung nach Fig. 3 aufgebaut. Beim Anlegen der Betriebsspannung an das Notruftelefon wird zunächst der Kondensator C1 aufgeladen. Bei Erreichen eines vorgegebenen Schwellwertes schalten die Inverter I1 und I2 und setzen ein Flip-Flop FF40. An den Ausgängen $\overline{Q}$ und Q erscheinen die Signale RES und $\overline{RES}$. Gleichzeitig wird das Mono-Flop MF35 gesetzt, das der Schaltung 34 in Fig. 4 entspricht. Vom Ausgang $\overline{Q}$ wird das Mono-Flop MF29 gesetzt, das dem Impulsgeber 29 in Fig. 4 entspricht. Von dessen Ausgang Q aus wird ein Signal von 5 ms Dauer auf den Transistor T27 gegeben, der den Reedschalter 7 für eine Zeit von 5 ms einschaltet. Vom Reedschalter 7 aus wird dieses Signal an den Clockeingang eines Flip-Flops FF42 und über ein NAND-Gatter U42 an den A-Eingang eines Mono-Flops MF42 gegeben. Das Flip-Flop FF42 kann nicht gesetzt werden, da an seinem R-Eingang das Signal $\overline{RES}$ liegt. Das Mono-Flop MF42 hat eine Rückkehrzeit von 10 ms, die in der bereits anhand von Fig. 3 beschriebenen Weise als Torzeit ausgenutzt wird, zur Unterscheidung, ob vom Reedschalter 7 her ein Signal zur Erzeugung eines Prüfimpulses oder ein Signal zur Aussendung eines Rufes abgegeben worden ist. Hierzu werden das vom Reedschalter 7 gelieferte Signal und das vom Ausgang $\overline{Q}$ des Mono-Flops MF42 abgegebene Signal den beiden Eingängen des NAND-Gatters U43 zugeführt. Dieses NAND-Gatter U43 kann bei Vorliegen des Steuerimpulses von 5 ms aus den anhand von Fig. 3 beschriebenen Gründen nicht durchschalten. Vielmehr wird vom Ausgang $\overline{Q}$ des Mono-Flops MF42 über das von MF35 her rückgesetzte Flip-Flop FF41 das Mono-Flop MF31 gestartet, so dass in der bereits beschriebenen Weise an dessen Ausgang Q ein Prüfimpuls von 400 ms Dauer abgegeben wird.

Wird vom Reedschalter 7 durch Betätigung der Ruftaste 6 ein Signal abgegeben, das länger als 10 ms dauert, so kann das NAND-Gatter U43 nach Ablauf der Torzeit von 10 ms durchschalten. Dies hat zur Folge, dass nunmehr das Flip-Flop FF44 gesetzt wird. Von seinem Ausgang Q wird ein Signal auf den Eingang a des NAND-Gatters U46 gegeben. Wenn die Betätigung der Ruftaste erfolgt, nachdem das Mono-Flop MF35 wieder in den Ausgangszustand zurückgekehrt ist, so kann U46 durchschalten und es geht das Rufsignal an die Schaltungen 16 und 35. Gleichzeitig wird über den Eingang C$_D$ das Mono-Flop MF31 gesperrt.

Während einer Unterbrechung des über die Signalleitung fliessenden Gleichstroms wird die Betriebsspannung für alle Kippschaltungen abgeschaltet und nur das Flip-Flop FF42, das an eine separate Spannungsversorgung 36 (Fig. 4) angeschlossen ist, bleibt eingeschaltet. Da in diesem Zustand das Signal $\overline{Res}$ nicht anliegt, kann dieses Flip-Flop durch Betätigung des Reedschalters 7 gesetzt werden. Mit Wiederanlegen der Betriebsspannung wird der normale Funktionsablauf eingeleitet, und das Signal vom Ausgang Q des Flip-Flops FF42 setzt das Flip-Flop FF44 direkt und der Ruf kann abgegeben werden.

Während der Sperrung der Abgabe eines Rufes durch das Mono-Flop MF35 wird das Rufsignal im Flip-Flop FF44 gespeichert und nach Freigabe über U46 abgegeben.

Beim Festklemmen der Ruftaste 6 oder Dauerbetätigung des Kontaktes 7 bleibt die Schaltung im Betriebszustand und es kann auch bei einer Schleifenunterbrechung vom Notruftelefon aus kein Prüfimpuls abgegeben werden, was von der Teilnehmerschaltung sogleich bemerkt werden muss.

## Patentansprüche

1. Notrufeinrichtung mit einem Notruftelefon, das über eine zweiadrige Signalleitung und eine in einer Vermittlungsstelle angeordnete Teilnehmerschaltung mit einer Abfragestelle verbindbar ist, und bei der die Gleichstromspeisung der im Notruftelefon angeordneten Hör-, Sprech- und Steuervorrichtungen über die Signalleitung erfolgt, wobei das Notruftelefon aus einem Ruhezustand, in dem ein konstanter Gleichstrom vorgegebener Grösse übr die Signalleitung fliesst, in einen Betriebszustand mit höherem Stromfluss schaltbar ist, und bei dem zu Überwachungszwecken vom Notruftelefon Prüfimpulse auf die Signalleitung gegeben werden, indem das Notruftelefon für eine gegebene Zeitdauer aus dem Ruhezustand in den Betriebszustand geschaltet wird, dadurch gekennzeichnet, dass in dem Notruftelefon eine Einschaltvorrichtung (7) angeordnet ist, deren Kontakt einerseits über einen mit einer Ruftaste (6) verbundenen Permanentmagneten (7a) und andererseits über eine Relaisspule (7b) betätigbar ist, sowie ein angesteuerter Impulsgeber (9, 29), der einen Steuerimpuls vorgegebener Länge erzeugt, welcher der Relaisspule (7b) zugeführt wird, wobei das von der Einschaltvorrichtung (7) abgegebene Einschaltsignal einer Steuerschaltung (10, 20) zugeführt wird, die je nachdem, ob das Einschaltsignal durch die Ruftaste (6) oder einen Steuerimpuls ausgelöst ist, entweder das Notruftelefon zur Abgabe eines Rufsignals vom Ruhezustand in den Betriebszustand schaltet oder einen ersten Zeitschalter (11, 31) ansteuert, der das Notruftelefon für ein vorgegebenes Zeitintervall zur Abgabe eines Prüfimpulses aus dem Ruhezustand in den Betriebszustand schaltet.

2. Notrufeinrichtung nach Anspruch 1, dadurch gekennzeichnet, dass der Impulsgeber (29) durch eine Spannungskontrollschaltung (32) angesteuert wird, die nach einer Unterbrechung des im Ruhezustand über die Signalleitung (1) fliessenden Gleichstroms bei Erreichen eines vorgegebenen Wertes ein Steuersignal abgibt.

3. Notrufeinrichtung nach Anspruch 2, dadurch gekennzeichnet, dass gleichzeitig mit der Ansteuerung des ersten Zeitschalters (31) die Hörvorrichtung (3 bis 32), ein mit der Hörvorrichtung verbundener Tonfrequenzsender (33) und die Sprechvorrichtung (4, 5) eingeschaltet werden.

4. Notrufeinrichtung nach einem der Ansprüche 2 oder 3, dadurch gekennzeichnet, dass durch das von der Spannungskontrollschaltung (32) abgegebene Steuersignal gleichzeitig eine Sperrschaltung (34) angesteuert wird, durch welche für einen vorgegebenen Zeitraum die Weitergabe von Rufsignalen über die Signalleitung (1) gesperrt ist.

5. Notrufeinrichtung nach Anspruch 1, dadurch gekennzeichnet, dass der Impulsgeber (9) durch einen zweiten Zeitschalter (8) nach Ablauf eines vorgegebenen Zeitintervalls angesteuert wird und der zweite Zeitschalter (8) nach Abgabe des Prüfimpulses durch den ersten Zeitschalter (11) wieder gestartet wird.

6. Notrufeinrichtung nach Anspruch 5, gekennzeichnet durch eine Spannungskontrollschaltung (12), die nach einer Unterbrechung des im Ruhezustand über die Signalleitung fliessenden Gleichstroms bei Erreichen eines vorgegebenen Wertes den ersten Zeitschalter (11) ansteuert und gleichzeitig mit der Abgabe des Prüfimpulses die Hörvorrichtung (2, 3) und ein mit der Hörvorrichtung verbundener Tonfrequenzsender (13) eingeschaltet werden.

7. Notrufeinrichtung nach Anspruch 6, dadurch gekennzeichnet, dass bei Abgabe eines vom zweiten Zeitschalter (8) ausgelösten Prüfimpulses dem Tonfrequenzsender (13) von der Steuerschaltung (10) ein Sperrsignal zugeführt wird.

8. Notrufeinrichtung nach einem der Ansprüche 6 oder 7, gekennzeichnet durch eine Sperrschaltung (14), durch die nach Abgabe eines Prüfimpulses aufgrund einer Unterbrechung des im Ruhezustand fliessenden Gleichstroms das Notruftelefon für einen vorgegebenen Zeitraum in den Ruhezustand geschaltet wird und während dieses Zeitraumes die Weitergabe von Rufsignalen durch die Steuerschaltung (10) gesperrt ist.

9. Notrufeinrichtung nach einem der Ansprüche 1 bis 8, dadurch gekennzeichnet, dass die Steuerschaltung (10, 30) eine Torschaltung (MF22-U23 bzw. MF42-U43) aufweist, in der die Länge des der Steuerschaltung zugeführten Einschaltsignals mit der Länge eines Vergleichsimpulses verglichen wird, der um einen vorgegebenen Betrag länger ist als der Steuerimpuls, aber kürzer als ein durch Betätigung der Ruftaste (6) erzeugtes Einschaltsignal, und dass ein Rufsignal abgegeben wird, wenn das Einschaltsignal zeitlich länger ist als der Vergleichsimpuls, und ein Prüfimpuls, wenn das Einschaltsignal zeitlich kürzer oder gleich dem Vergleichsimpuls ist.

10. Notrufeinrichtung nach einem der Ansprüche 1 bis 9, dadurch gekennzeichnet, dass in der Steuerschaltung (10, 30) ein Rufspeicher (FF22-FF24 bzw. FF42-FF44) enthalten ist, in dem während des Zeitraumes, in welchem die Weitergabe von Rufsignalen auf die Signalleitung (1) gesperrt ist, ein durch die Ruftaste (6) ausgelöstes Einschaltsignal gespeichert wird und nach Aufhebung der Sperrung von der Steuerschaltung (10, 30) das Rufsignal abgegeben wird.

11. Notrufeinrichtung nach einem der Ansprüche 1 bis 10, dadurch gekennzeichnet, dass bei Dauerbetätigung des Kontaktes der Einschaltvorrichtung (7) die Abgabe der Prüfimpulse unterbrochen ist.

**Revendications**

1. Dispositif d'appel d'urgence comprenant un téléphone d'appel d'urgence susceptible d'être raccordé par une ligne de signaux bifilaire et un circuit d'abonné prévu dans un central avec un poste répondeur, dispositif dans lequel l'alimentation en courant continu des dispositifs d'écoute, de parole et de commande prévus dans le téléphone d'appel d'urgence s'effectue à travers la ligne de signaux, le téléphone d'appel d'urgence pouvant être commuté d'un état de repos, où un courant continu circule dans la ligne de signaux, à un état de service où l'intensité de ce courant est plus élevée, et dans lequel, à des fins de surveillance du téléphone d'appel d'urgence, des impulsions de contrôle sont appliquées à la ligne de signaux du fait que le téléphone d'appel d'urgence est commuté pendant une durée déterminée de l'état de repos à l'état de service, caractérisé en ce que le téléphone d'appel d'urgence contient un dispositif d'enclenchement (7) dont le contact peut être actionné, d'une part, au moyen d'un aimant permanent (7a) solidaire d'un bouton d'appel (6) et, d'autre part, au moyen d'une bobine de relais (7b), de même qu'un générateur d'impulsion excité (9, 29) qui produit une impulsion de commande de longueur préfixée appliquée à la bobine de relais (7b), le signal d'enclenchement délivré par le dispositif d'enclenchement (7) étant appliqué à un circuit de commande (10, 30) qui, suivant que le signal d'enclenchement a été produit par le bouton d'appel (6) ou par une impulsion de commande, fait passer le téléphone d'appel d'urgence de l'état de repos à l'état de service, en vue de la délivrance d'un signal d'appel, ou excite un premier interrupteur à minuterie (11, 31) qui fait passer le téléphone d'appel d'urgence pendant un intervalle de temps préfixé de l'état de repos à l'état de service, pour la délivrance d'une impulsion de contrôle.

2. Dispositif selon la revendication 1, caractérisé en ce que le générateur d'impulsion (29) est excité par un circuit de contrôle de tension (32) qui délivre un signal de commande lorsque, après une interruption du courant continu circulant par la ligne de signaux (1) à l'état de repos, une valeur de tension préfixée est atteinte.

3. Dispositif selon la revendication 2, caractérisé en ce que le dispositif d'écoute (3 à 32), un émetteur à fréquence acoustique (33) connecté au dispositif d'écoute et le dispositif de parole (4, 5) sont enclenchés en même temps que le premier interrupteur à minuterie (31) est excité.

4. Dispositif selon l'une des revendications 2 ou 3, caractérisé en ce que le signal de commande délivré par le circuit de contrôle de tension (32) attaque en même temps un circuit de blocage (34) qui bloque la transmission de signaux d'appel par la ligne de signaux (1) pendant une durée préfixée.

5. Dispositif selon la revendication 1, caractérisé en ce que le générateur d'impulsion (9) est excité par un second interrupteur à minuterie (8) après écoulement d'un intervalle de temps préfixé, et que ce second interrupteur à minuterie (8) est redémarré par le premier interrupteur à minuterie (11) après délivrance de l'impulsion de contrôle.

6. Dispositif selon la revendication 5, caractérisé par un circuit de contrôle de tension (12) qui, après une interruption du courant continu circulant à l'état de repos par la ligne de signaux, excite le premier interrupteur à minuterie (11) lorsqu'une valeur de tension préfixée est atteinte et que le dispositif d'écoute (2, 3) et un émetteur à fréquence acoustique (13) sont enclenchés en même temps qu'est délivrée l'impulsion de contrôle.

7. Dispositif selon la revendication 6, caractérisé en ce que le circuit de commande (10) applique un signal de blocage à l'émetteur à fréquence acoustique (13) lors de la délivrance d'une impulsion de contrôle déclenchée par le second interrupteur à minuterie (8).

8. Dispositif selon l'une des revendications 6 ou 7, caractérisé par un circuit de blocage (14) qui, après délivrance d'une impulsion de contrôle par suite d'une interruption du courant continu circulant à l'état de repos, commute le téléphone d'appel d'urgence pendant une durée préfixée à l'état de repos, le circuit de commande (10) bloquant la transmission de signaux d'appel pendant cette durée.

9. Dispositif selon l'une des revendications 1 à 8, caractérisé en ce que le circuit de commande (10, 30) présente un circuit de porte (MF22-U23, respectivement MF42-U43) dans lequel la longueur du signal d'enclenchement appliqué au circuit de commande est comparée avec la longueur d'une impulsion témoin qui est plus longue d'une quantité préfixée que l'impulsion de commande, mais plus courte qu'un signal d'enclenchement produit par la manœuvre du bouton d'appel (6), et qu'un signal d'appel est délivré lorsque le signal d'enclenchement est plus long dans le temps que l'impulsion témoin et une impulsion de contrôle est délivrée lorsque le signal d'enclenchement possède une durée plus courte que celle de l'impulsion témoin ou égale à celle-ci.

10. Dispositif selon l'une des revendications 1 à 9, caractérisé en ce que le circuit de commande (10, 30) contient une mémoire d'appel (FF22-FF24, respectivement FF42-FF44) dans laquelle est mémorisé un signal d'enclenchement éventuellement produit au moyen du bouton d'appel (6) pendant le temps où la transmission de signaux d'appel à la ligne de signaux (1) est bloquée, le signal d'appel mémorisé étant délivré après suppression du blocage par le circuit de commande (10, 30).

11. Dispositif selon l'une des revendications 1 à 10, caractérisé en ce que la délivrance des impulsions de contrôle est interrompue en cas d'actionnement continu du contact du dispositif d'enclenchement (7).

## Claims

1. Emergency-call installation including an emergency-call telephone which is adapted to be connected, through a two-wire signal line and a line-terminating circuit arranged in a switching centre, with an inquiry station, and in which the DC supply to the listening-, speaking- and control-devices arranged in the emergency-call telephone is effected through the signal line, whereby the emergency-call telephone is adapted to be switched over from an inactivated state, in which a constant DC of predetermined magnitude flows through the signal line, to an operational state, having a higher current flow, and whereby, for check purposes, check pulses are emitted by the emergency-call telephone into the signal line by switching the emergency-call telephone over from its inactivated to ist operational state for a predetermined period of time, characterized in that, in the emergency-call telephone, a switch-on device (7) is arranged the contact of which is adapted to be actuated, on the one hand, through a permanent magnet (7a) connected to a calling key (6) and, on the other hand, through a relay coil (7b) and, further, an activated pulse generator (9, 29) is arranged for generating a control pulse of predetermined length, which control pulse is transmitted to the relay coil (7b), whereby the switch-on signal emitted by the switch-on device (7) is transmitted to a control circuit (10, 30) which, depending on whether the switch-on signal is released by the calling key (6) or by a control pulse, either switches the emergency-call telephone over from its inactivated to its operational state for the emission of a call signal, or activates a first time switch (11, 31) for switching the emergency-call telephone over from its inactivated to its operational state during a predetermined period of time for the emission of a check pulse.

2. Emergency-call installation as claimed in Claim 1, characterized in that the pulse generator (29) is activated by a voltage-control circuit (32) which, after an interruption of the DC flower through the signal line (1) in the inactivated state, emits a control signal upon attainment of a predetermined value.

3. Emergency-call installation as claimed in Claim 2, characterized in that the listening-device (3 to 32), an audio-frequency transmitter (33) connected thereto, and the speaking-device (4, 5) are switched on simultaneously with the activation of the first time switch (31).

4. Emergency-call installation as claimed in one of Claims 2 or 3, characterized in that, by means of the control signal emitted by the voltage-control circuit (32), a blocking circuit (34) is simultaneously activated, by means of which blocking circuit the transmission of call signals through the signal line (1) is blocked for a predetermined period of time.

5. Emergency-call installation as claimed in Claim 1, characterized in that the pulse generator (9) is activated by a second time switch (8) after the expiration of a predetermined period of time, and that, after the emission of the check pulse, the second time switch (8) is actuated again by the first time switch (11).

6. Emergency-call installation as claimed in Claim 5, characterized by a voltage-control circuit (12) which, after the interruption of the DC flowing through the signal line in the inactivated state, activates the first time switch (11) upon the attainment of a predetermined value, which time switch, simultaneously with the emission of the check pulse, switches on the listening-device (2, 3) and an audio-frequency transmitter (13) connected therewith.

7. Emergency-call installation as claimed in Claim 6, characterized in that, upon the emission of a check pulse released by the second time switch (8), a blocking signal is transmitted from the control circuit (10) to the audio-frequency transmitter (13).

8. Emergency-call installation as claimed in one of Claims 6 or 7, characterized by a blocking circuit (14) by means of which, after the emission of a check pulse by reason of an interruption of the DC flowing in the inactivated state, the emergency-call telephone is switched over to the inactivated state for a predetermined period of time during which the transmission of call signals through the control circuit (10) is blocked.

9. Emergency-call installation as claimed in one of Claims 1 to 8, characterized in that the control circuit (10, 30) includes a gate circuit (MF22-U23; MF42-U43) in which the length of the switch-on signal transmitted to the control circuit is compared with the length of a comparative pulse which, by a predetermined amount, is longer than the control pulse but shorter than a switch-on signal generated by the actuation of the calling key (6), and that a call signal is emitted if the switch-on signal is longer in time than the comparative pulse, whereas a check pulse is emitted if the switch-on signal is shorter in time than or of equal length as the comparative pulse.

10. Emergency-call installation as claimed in one of Claims 1 to 9, characterized in that a call storage (FF22-FF24; FF42-FF44) is contained in the control circuit (10, 30), in which call storage, during the period of time in which the transmission of call signals to the signal line (1) is blocked, a switch-on signal released by the calling key (6) is stored, and, after elimination of the blockage, the call signal is emitted by the control circuit (10, 30).

11. Emergency-call installation as claimed in one of Claims 1 to 10, characterized in that, upon continuous actuation of the contact of the switch-on device (7), the emission of the check pulses is interrupted.

FIG.1

FIG.2

FIG.3

FIG. 4

FIG. 5